# FASCICULE DE BREVET EUROPEEN

(11) **EP 1 324 468 B1**
(45) Date de publication et mention de la délivrance du brevet: **24.10.2012**
(21) Numéro de dépôt: 01440430.5
(22) Date de dépôt: 28.12.2001
(51) Int. Cl.: H02K 7/18

(54) **Télécommande avec générateur électrique**
Fernbedienung mit Stromerzeuger
Remote control with electric generator

(43) Date de publication de la demande: 02.07.2003
(73) Titulaire: HAGER ELECTRO S.A., 67215 Obernai (FR)
(72) Inventeur: Gancel Etienne, 25660 Morre (FR); Kalischek Nicolas, 67190 Mutzig (FR); Burrow, Chris, Watery Lane -Ulverston-Cumbria LA12 9DD (GB)
(74) Mandataire: Littolff, Denis

(56) Documents cités:
- WO-A-98/42060
- WO-A2-01/67580
- DE-A- 3 412 517
- GB-A- 2 262 324
- GB-A- 2 332 268
- GB-A- 2 350 245
- US-A- 5 630 155

## Description

La présente invention concerne un dispositif de télécommande de l'état d'au moins un élément récepteur, comportant au moins un organe de commande du type bouton-poussoir, c'est-à-dire mobile entre une position de repos stable, à laquelle il est rappelé après action, et une position de commande.

De tels dispositifs de télécommande sont bien connus et utilisés dans de nombreux domaines : ouverture des battants de véhicules, commande d'appareils électroniques, de volets roulants, de portes de garage, commande à distance de luminaire, etc. Les technologies employées, utilisant des ondes radiofréquences, infrarouges, ultrasonores, etc..., permettent de s'affranchir de tout câblage et offrent de plus un confort d'utilisation inégalé.

L'emploi de dispositifs de télécommande peut par ailleurs s'avérer judicieux dans des applications domotiques, notamment lorsqu'ils contribuent à éviter la mise en oeuvre de travaux lourds ou de réalisations disgracieuses sur des bâtiments, par exemple dans le cadre d'opérations de rénovation. Leur utilisation permet d'éviter toute destruction par exemple nécessaire pour installer des réseaux filaires noyés dans les parois.

L'un des inconvénients liés à l'emploi de ces technologies, utilisant par définition un émetteur et un récepteur, réside dans la nécessité d'utiliser une source d'alimentation électrique sous forme de pile(s) ou de batterie(s) disposée(s) dans l'émetteur. Ces dernières nécessitent en effet des remplacements réguliers lorsqu'elles sont épuisées. Pour éviter toute rupture fâcheuse de fonctionnement, il est alors utile de disposer de piles ou de batteries de rechange, ce qui implique une certaine organisation, voire la mise en place d'une gestion de leur stock.

Il n'est pas rare que, quelle que soit la disponibilité ou le sens de l'organisation de l'utilisateur, le commutateur tombe inopinément en panne un jour ou l'autre par déchargement des piles ou batteries. Il faut alors supporter l'incommodité résultant de l'impossibilité de faire fonctionner le ou les systèmes télécommandés, quelle que soit leur importance dans la vie quotidienne.

Pour s'assurer que le dysfonctionnement provient bien d'un déchargement, il est de plus alors préférable de prévoir l'émission d'un signal de quittance par le récepteur vers l'émetteur. Cette précaution impose cependant d'alourdir le système en équipant les récepteurs cibles d'émetteurs, et vice-versa, ce qui n'est guère avantageux en termes économiques.

Pour pallier cet inconvénient, des dispositifs à télécommande ne nécessitant ni piles, ni batteries ont été proposés. Ainsi, le déposant, dans une demande britannique déposée sous le N° 0005617.6 et publiée sous WO 0167580A décrit une télécommande, dans laquelle au moins une touche de commande à bascule entraîne, lors de sa course rotative, un bras tournant relié à un chariot guidé en translation, doté de dents latérales entraînant des engrenages répercutant leurs mouvements rotatifs au rotor d'un générateur électrique.

Des moyens de rappel sont prévus pour que la bascule de commande revienne à sa position de repos. Le chariot animé d'un mouvement rectiligne coopère avec une came qui lui permet de sortir de l'emprise du bras tournant qui l'entraîne, après réalisation d'une course rectiligne d'une certaine longueur. Des moyens de rappel lui permettent alors également de revenir à sa position initiale de repos.

Ces moyens de rappel sont de plus utilisés pour le stockage et la restitution de l'énergie mécanique issue de l'action sur l'organe de commande, en vue d'entraîner ledit générateur électrique, La liaison mécanique avec ce dernier n'est cependant réalisée que dans la phase de restitution de l'énergie.

L'emploi d'un mécanisme mobile en translation entre deux systèmes rotatifs distincts, ajouté au changement d'axe entre lesdits systèmes nécessite cependant une structure de conception relativement complexe, économiquement moins favorable à fabriquer notamment du fait du nombre de pièces impliquées dans le mécanisme.

Le document GB-2 350 245 divulgue un dispositif, notamment utilisable pour des télécommandes, comportant un organe de commande mobile entre une position de repos stable, à laquelle il est rappelé après action, et une position de commande ; ainsi que des moyens de transmission de l'énergie mécanique utilisée pour actionner l'organe de commande, entraînés par ce dernier pendant sa course d'actionnement jusqu'à obtention d'un débrayage en fin de course, lesdits moyens de transmission revenant alors à leur position initiale ; et des moyens de restitution de l'énergie mécanique communiquée par lesdits moyens de transmission, l'énergie restituée étant utilisée pour actionner un générateur électrique prévu pour alimenter un circuit électronique émettant des signaux de commande à l'adresse du ou des dispositifs récepteurs.

De l'énergie est restituée dès que les moyens de transmission sont entraînés par l'organe de commande.

Enfin, le document GB-2 332 268 divulgue un système à manivelle armant des moyens de stockage de l'énergie, laquelle est restituée lorsqu'on actionne un organe relâchant lesdits moyens de stockage, qui restituent l'énergie stockée.

L'objectif de la présente invention, utilisant par ailleurs le même principe basé sur l'utilisation de moyens de stockage et de restitution de l'énergie, est d'aboutir à une configuration mécanique simplifiée, plus facile et moins onéreuse à fabriquer.

La simplification du mécanisme doit au surplus aboutir à l'utilisation d'un moins grand nombre de pièces, ce qui a pour résultat d'abaisser encore les coûts de production, et secondairement de renforcer la fiabilité de l'ensemble.

Pour remplir ces objectifs, et d'autres qui deviendront apparents dans la suite du texte, le dispositif de télécommande de l'invention comporte essentiellement :
- au moins un organe de commande mobile entre une position de repos stable, à laquelle il est rappelé après action, et une position de commande à la maniére d'un commutateur ;
- des moyens de transmission de l'énergie mécanique utilisée pour actionner l'organe de commande, entraînés par ce dernier pendant sa course d'actionnement jusqu'à obtention d'un débrayage en fin de course, lesdits moyens de transmission revenant alors à leur position initiale ;
- des moyens de stockage et de restitution de l'énergie mécanique communiquée par lesdits moyens de transmission, ladite restitution débutant au moment du débrayage enfin de course ;
l'énergie restituée étant utilisée pour actionner un générateur électrique prévu pour alimenter un circuit électronique émettant des signaux de commande à l'adresse du ou des dispositifs récepteurs.

Selon une caractéristique principale, les moyens de transmission de l'énergie mécanique et les moyens de stockage et de restitution de ladite énergie sont disposés coaxiaux, leur axe étant de plus coaxial ou parallèle à l'axe d'application de l'action exercée par l'organe de commande.

Ainsi, l'architecture du système ne se développe plus selon plusieurs axes non concourants, comme c'est le cas dans le dispositif de l'art antérieur précité, dans lequel le déplacement communiqué initialement à l'organe de commande est transmis au générateur électrique par un système mécanique gérant deux changements d'axe,

De préférence, lesdits moyens de stockage et de restitution de l'énergie mécanique consistent en un élément ressort interposé entre une pièce fixe par rapport au boîtier du commutateur et lesdits moyens de transmission, élément qui emmagasine l'énergie mécanique issue de l'organe de commande et la restitue après ledit débrayage.

Compte tenu de la contrainte architecturale posée auparavant, l'élément ressort est à présent disposé suivant le même axe de fonctionnement que celui des éléments qui interviennent en amont dans la chaîne structurelle, à savoir l'organe de commande d'une part, et les moyens de transmission de l'effort qui y est imprimé par l'utilisateur d'autre part. La condition de coaxialité permet une plus grande simplicité et compacité du dispositif, mais est également avantageuse en termes de perte d'énergie : le fait que les différents éléments soient distribués le long du même axe permet de limiter les liaisons mécaniques, et de réduire ainsi les pertes survenant plus particulièrement dans les zones de liaison des systèmes mécaniques.

De préférence encore, et toujours dans l'optique d'améliorer l'efficacité du fonctionnement et d'abaisser les coûts de montage, ledit élément ressort est secondairement utilisé comme moyen de rappel desdits moyens de transmission de l'énergie en leur position initiale.

L'élément ressort assure alors simultanément deux fonctions : d'une part restituer l'énergie afin de la transmettre au générateur électrique, et d'autre part rappeler les moyens de transmission dans leur position de départ, afin que le commutateur électrique puisse être réutilisé, de façon répétitive et toujours dans les mêmes conditions.

Selon une possibilité, lesdits moyens de transmission de l'énergie comportent une pièce animée d'un mouvement rotatif, communiqué ensuite à l'élément ressort constituant les moyens de stockage et de restitution de l'énergie,

Les designs actuels des dispositifs de télécommande, dans leurs différentes applications notamment citées auparavant, offrent de multiples possibilités répondant pour partie à des soucis esthétiques, et pour partie à des raisons liées à leur commodité d'utilisation ou à des contraintes techniques par exemple d'ordre spatial.

Dans le cadre de l'invention, et selon une configuration préférentielle, l'organe de commande est une touche exerçant sur les moyens de transmission de l'énergie une action de direction sensiblement rectiligne.

Dans ce cas, et dans la mesure du possible, ladite direction sera confondue avec les axes de fonctionnement des moyens de transmission et des moyens de stockage et de restitution de l'énergie mécanique.

Ainsi, selon un choix technologique notamment induit par les éléments mécaniques disposés en aval desdits moyens de stockage et de restitution, une configuration au moins partiellement rotative est implantée dans le mécanisme sur lequel agit la touche.

Plus précisément, cette dernière exerce une action sur un poussoir auquel elle transmet l'énergie qu'elle reçoit, ledit poussoir étant guidé en translation rectiligne dans le boîtier du commutateur et entraînant ladite pièce rotative constituée d'une came d'allure cylindrique transformant le déplacement linéaire dudit poussoir en un déplacement rotatif.

L'ensemble constitué du poussoir et de la came rotative forme de fait les moyens de transmission de l'énergie issue de l'organe de commande.

Plus précisément encore, le poussoir entoure ladite came et agit sur elle par l'intermédiaire d'au moins un doigt d'orientation radiale qui coopère avec une rampe hélicoïdale pratiquée dans une surface en regard de la came, sur un relief sensiblement en forme de triangle rectangle dont elle forme l'hypoténuse, et dont les côtés rectilignes sont respectivement parallèle et perpendiculaire à l'axe de la came. Ce relief fait saillie dans un évidement pratiqué dans ladite surface laissant subsister entre ses parois et lesdits côtés rectilignes un espace assurant le guidage dudit doigt lorsque la came et le poussoir sont rappelés à leur position initiale après leur débrayage, provoqué par le franchissement par le doigt du sommet du triangle défini par la rampe et le côté perpendiculaire à l'axe de la came.

Le ou les reliefs d'allure triangulaire qui équipent la périphérie de la came contribuent à plusieurs fonctions :
- transformer la mouvement de nature axiale du poussoir en un mouvement rotatif grâce à l'action de chaque doigt sur la rampe ;
- permettre l'escamotage dudit doigt lorsque la totalité de la rampe a été parcourue, permettant à la came de revenir à sa position de départ et au ressort de libérer son énergie ;
- participer au guidage axial du poussoir relativement à la came, pour que le premier cité retrouve sa position initiale, grâce aux moyens de rappel interposés entre eux.

La came rotative représente par conséquent un élément essentiel du dispositif, puisque outre les fonctions précitées, elle constitue l'élément qui est directement relié aux moyens de stockage et de restitution de l'énergie, à savoir le ressort moteur qu'elle déforme dans un premier temps, lors de la phase de stockage de l'énergie, et qu'elle laisse libre de reprendre sa forme initiale après débrayage de la relation mécanique qu'elle entretient avec le poussoir, lors de la phase de restitution de l'énergie.

Le sommet du relief d'allure triangulaire défini par le côté rectiligne parallèle à l'axe de la came et la rampe est surmonté d'une patte élastique, d'une seule pièce avec ladite came et dont une face prolonge sensiblement ladite rampe, dépassant dans l'espace ménagé entre ledit côté et la paroi en regard de l'évidement, formant butée axiale pour ledit doigt.

Cette butée, qui n'est active que dans un sens, verrouille toute possibilité de déplacement purement axial du poussoir, qui empêcherait la transformation de son déplacement translatif en un déplacement circulaire de la came. Au contraire, la face de ladite butée prolongeant la rampe impose la décomposition de l'action exercée par le poussoir en deux composantes, dont seule la composante perpendiculaire à l'axe est active, aboutissant au déplacement rotatif de la came.

De préférence, chaque doigt peut être dirigé vers l'intérieur du poussoir, en direction de la surface périphérique externe de la came.

En fait, le poussoir comporte des doigts répartis à intervalle régulier le long de la périphérie de la came, qui comprend un nombre et une répartition correspondante de reliefs à rampe hélicoïdale, lesdits doigts étant disposés à l'extrémité de bras parallèles à l'axe de la came, dont les autres extrémités sont réunies en une paroi comportant un élément de contact avec la touche.

La répartition des efforts se fait dès lors sur la totalité de la périphérie de la came. Cet équilibre, souhaitable en termes de création du couple de rotation, améliore également la sensation tactile de l'utilisateur.

Selon une possibilité, l'élément de contact apparaissant sur la paroi du poussoir est constitué d'une pastille centrée par rapport aux bras axiaux.

Cette pastille a notamment pour fonction de s'adapter aux différents types de touches qui peuvent être utilisées en liaison avec le dispositif de l'invention.

D'une manière générale, la conception précitée des moyens de transmission de l'énergie permet de s'affranchir de la vitesse d'activation du poussoir de commande, et de garantir par conséquent la délivrance d'une énergie suffisante dans tous les cas. Le débrayage, qui marque la fin de la phase de stockage de l'énergie, que l'on peut également qualifier de phase d'armement, provoque de plus une sensation tactile assimilable à une quittance d'émission, qui procure un confort d'utilisation supplémentaire aux utilisateurs, et qui est probablement indispensable pour un non-voyant.

Pour faire fonctionner le commutateur, il faut bien entendu que l'effort appliqué à l'organe de commande soit supérieur à la résistance de l'ensemble formé par le mécanisme d'armement et l'élément ressort.

Pour assurer la fonction qui leur est assignée, les bras et les doigts du poussoir sont guidés en translation dans un conduit d'allure cylindrique monté fixe dans le boîtier du contacteur, doté d'évidements axiaux logeant lesdits bras, et dont les fonds comportent des fentes dans lesquelles coulissent des prolongements externes desdits doigts. L'extrémité transversale de ces fentes leur sert de butée axiale, empêchant le poussoir de s'écarter de la zone d'activation de la came.

Les évidements axiaux et les fentes constituent de plus un double moyen de guidage, qui garantit un mouvement du poussoir parfaitement linéaire.

Il est évidemment essentiel que le poussoir puisse revenir à sa position initiale, afin que le commutateur de l'invention soit utilisable dans les mêmes conditions et de manière répétitive. A cet effet, ledit poussoir comporte un arbre central coulissant dans un conduit central axial de la came, un ressort rappelant ledit poussoir dans sa position initiale de repos étant Interposé entre eux.

La came est elle aussi guidée par rapport au boîtier du commutateur. Pour assurer sa fonction, elle doit y être montée libre en rotation, par exemple dans un palier fixe par rapport au boîtier. De même, si l'une des extrémités de l'élément ressort est fixée à la came rotative pour les raisons mentionnées ci-dessus, l'autre extrémité doit être montée fixe par rapport audit boîtier.

La déformation du ressort se fait alors à partir d'une de ses extrémités, qui est entraînée en rotation par la came jusqu'au débrayage came / poussoir.

Lorsque le ressort reprend sa forme initiale, au moment de la restitution de l'énergie, Il entraîne la came en sens inverse, sans que le poussoir ne s'y oppose, puisque les doigts ne sont plus, à ce moment, au contact de la rampe, et ne peuvent plus s'opposer à une rotation relative came / poussoir.

Plus précisément, l'élément ressort est un ressort de torsion hélicoïdal entourant la base du corps de la came rotative, d'axe de torsion coaxial à l'axe de rotation de ladite came.

La totalité du système d'armement est à présent posée : l'organe de commande, sous la forme d'une touche, surmonte un poussoir entourant une came rotative dont le corps est lui-même entouré par un ressort de torsion. L'ensemble constitue un mécanisme compact, apte à reproduire de façon répétitive une première phase d'armement au cours de laquelle le poussoir se déplace en direction du ressort hélicoïdal, imprimant un mouvement rotatif à la came qui déforme le ressort, jusqu'à intervention du mécanisme d'échappement en bout des rampes hélicoïdales, qui supprime l'action du poussoir sur la came et enlève toute contrainte sur le ressort. Ces éléments reviennent dans une deuxième phase à leur position initiale. En particulier, le poussoir et la came se retrouvent dans un premier temps, en termes de déplacement angulaire, dans leur position initiale. Les moyens de rappel interposés entre eux réalisent ensuite le retour à leur position relative initiale dans une direction axiale.

De préférence, le générateur électrique utilisé dans le cadre de l'invention est rotatif, d'axe parallèle à la came rotative.

D'une manière avantageuse, la transmission de l'énergie restituée par l'élément ressort peut donc être réalisée de manière classique en mettant en liaison mécanique deux systèmes rotatifs d'axe parallèle.

A cet effet, la came rotative comporte une excroissance s'étendant radialement, prévue pour entraîner un mécanisme d'actionnement du générateur électrique.

Plus précisément, la périphérie de ladite excroissance est munie de dents coopérant avec un jeu d'engrenages amplifiant son déplacement angulaire et sa vitesse, l'engrenage de sortie dudit jeu étant engrené avec le rotor du générateur uniquement lors de la restitution d'énergie par l'élément ressort, c'est-à-dire après débrayage du poussoir et de la came.

Le mécanisme amplificateur permet de transformer le secteur angulaire initialement parcouru par ladite excroissance en plusieurs tours de l'engrenage de sortie en contact avec le rotor. De même, la vitesse initiale est largement amplifiée. Cet amplificateur mécanique vise à mettre le générateur électrique dans de bonnes conditions pour produire de l'énergie électrique pendant une période déterminée.

Comme indiqué, ce mécanisme amplificateur n'entraîne pas le rotor pendant la phase de stockage de l'énergie, mais uniquement pendant la phase de restitution.

A cet effet, l'engrenage de sortie est libre en rotation dans des paliers oblongs fixes par rapport au boîtier du commutateur, de grand axe orienté radialement par rapport à l'axe de rotation dudit rotor. La disposition et les dimensions desdits paliers, combinés à la conception du jeu d'engrenages formant le mécanisme amplificateur, notamment pour ce qui concerne la vitesse et le sens de rotation de l'engrenage de sortie, permet un débrayage de ce dernier lors de la phase de stockage de l'énergie.

A l'inverse, les efforts moteurs et réactifs supportés par cet engrenage de sortie le ramènent pendant la phase de restitution de l'énergie en prise avec le rotor du générateur électrique.

De préférence, ce dernier produit un courant électrique sinusoïdal triphasé.

Cette solution triphasée a l'avantage de fournir un signal présentant peu d'ondulations en regard du monophasé, et rend ainsi plus facile la conservation de la tension nominale. Cette configuration permet également de compenser le couple résiduel.

De préférence, le générateur électrique est monté sur une plaque à circuit imprimé comportant les composants du circuit électronique émetteur de signaux à l'adresse du ou des dispositifs récepteurs.

Pour être exploitable, le courant sinusoïdal issu du générateur électrique doit cependant être traité, Ainsi, le circuit électronique comporte un pont de diodes de redressement du courant, qui charge une capacité alimentant le circuit émetteur.

Secondairement, cette capacité sert également à faire briller une diode électroluminescente, en fin d'émission et jusqu'à ce qu'il y ait disparition d'énergie. L'illumination de cette diode marque en principe la fin de la transmission.

Compte tenu de la durée de fonctionnement du générateur électrique, la période d'émission des signaux est nécessairement réduite. En tout début d'apparition de l'énergie, un microprocesseur du circuit électronique est activé, lequel attend quelques milli-secondes que la capacité soit assez chargée avant de transmettre les informations en émettant des ondes à l'adresse du ou des dispositifs télécommandés.

Selon une possibilité additionnelle, l'élément ressort des moyens de stockage et de restitution de l'énergie peut constituer l'antenne d'émission du signal, et son extrémité fixe est alors reliée au circuit électronique.

Dans ce cas, le dimensionnement du ressort doit satisfaire à la relation qui existe entre la longueur d'onde à émettre, le diamètre du fil ressort et sa raideur. Ladite longueur d'onde et la raideur étant prédéterminées, le diamètre devient imposé.

Le circuit électronique comporte de plus des moyens de test, dans le cas où plusieurs contacts équipent la touche du commutateur. Ces moyens testent alors le contact ou la combinaison de contacts qui a été actionnée.

Les contacts sont scrutés un par un, pour détecter sur lequel ou lesquels la pression a été exercée. En fonction de cette dernière information, le signal émis par le dispositif est codé différemment, par un ordre de commande différent. L'information concernant chaque contact activé peut être donnée par un capteur de fin de course.

L'existence de plusieurs contacts permet d'émettre un signal à l'adresse de récepteurs différents, ou de générer des signaux indiquant des modes de fonctionnement distincts à l'adresse du même récepteur, si le récepteur dispose de moyens de décodage. Des combinaisons supposant l'activation simultanée de deux ou plusieurs contacts sont également possibles, et font l'objet de messages codés particuliers.

En fin d'émission, qui dure quelques dizaines de millisecondes, la capacité du réservoir est court-circuitée afin de permettre un fonctionnement ultérieur dans les mêmes conditions.

Selon une construction avantageuse, les paliers de rotation de la came et d'au moins un engrenage du jeu d'engrenages amplificateur sont pratiqués dans une première plaque à laquelle est fixé le circuit imprimé. Le conduit de guidage du poussoir, le palier du rotor du générateur, le palier de rotation d'au moins un engrenage et un orifice de fixation de l'une des extrémités du ressort moteur sont pratiqués dans une seconde plaque de dimensions identiques à la première, lesdites plaques - disposées en regard l'une de l'autre - délimitant un volume dans lequel ces éléments sont assemblés, formant un ensemble compact monté dans le boîtier du commutateur.

Cette structure exploite la grande compacité permise par la conception de l'invention, et elle permet l'élaboration à l'avance d'un ensemble intégrable ensuite dans un boîtier de commutateur. Elle traduit de plus la simplification de l'architecture permise par l'invention, qui fonctionne avec un mécanisme dont tous les axes de déplacement sont parallèles.

Ce mécanisme simplifié est basé sur un nombre réduit de pièces, et s'avère fiable, facile à construire et économique à la fabrication.

Le dispositif de l'invention fonctionne à la manière d'un commutateur actlvable par un utilisateur, mais également comme un capteur émetteur qui retransmet une information par exemple sur le positionnement d'un élément.

Ce capteur peut répercuter un mouvement rectiligne, l'élément agissant alors sur le poussoir, ou un mouvement rotatif par action dudit élément directement sur la came, Une telle configuration pourrait par exemple s'appliquer à un levier dont la course angulaire est identique à celle de la came, avec laquelle elle coopère avant d'en être dégagée, pour contrôler l'ouverture /fermeture des fenêtres à des fins de sécurité dans le domaine de la domotique..

L'invention va à présent être décrite plus en détail, en référence aux figures annexées, pour lesquelles:
- la figure 1 est une vue en perspective éclatée du mécanisme complet de l'invention, formant un ensemble à disposer à l'intérieur d'un boîtier d'un dispositif de télécommande ;
- la figure 2 est une vue en perspective de la came rotative ;
- la figure 3 représente l'ensemble d'armement, constitué du poussoir, de la came rotative et de l'élément ressort ;
- la figure 4 montre la totalité des éléments constitutifs de l'invention, disposés sur une plaque inférieure ;
- la figure 5 montre en perspective une vue de dessous de la plaque supérieure et de son dispositif de guidage du poussoir ; et
- la figure 6 est une vue en perspective reprenant tous les éléments de la figure 1 assemblés en un ensemble compact.

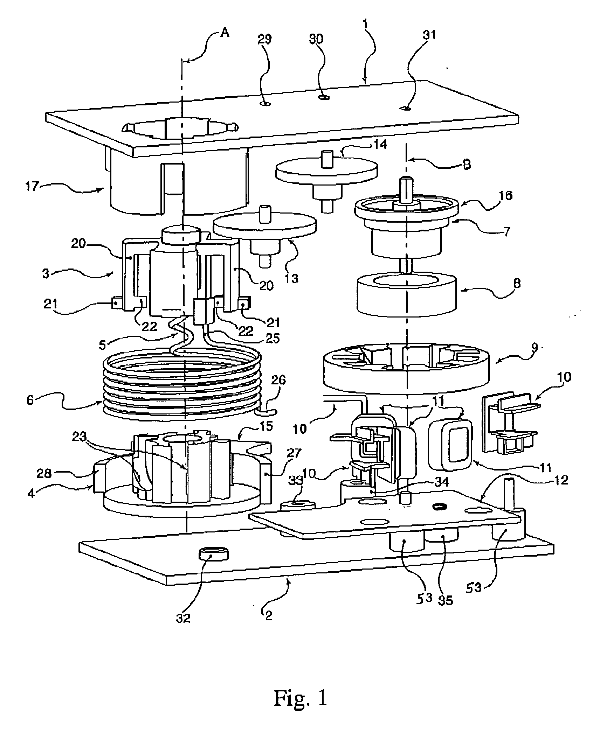

En référence à la figure 1, les différents éléments constituant le dispositif de télécommande selon l'invention sont disposés principalement suivant deux axes (A, B) et entre deux plaques respectivement supérieure (1) et inférieure (2). Les composants disposés suivant l'axe (A) constituent le coeur de l'invention : il s'agit du poussoir (3), de la came (4), du ressort de rappel (5) interposé entre eux, et de l'élément ressort (6) formant les moyens de stockage et de restitution de l'énergie.

L'axe (B) regroupe le rotor (7), l'aimant rotorique (8) et la culasse magnétique du stator (9) à laquelle sont rapportées des carcasses (10) munies des bobines (11) statoriques, espacées de 120° pour produire un courant sinusoïdal triphasé.

Le générateur électrique ainsi constitué est disposé sur une plaque de circuit imprimé (12) montée sur des plots (53) de la plaque (2).

Des engrenages (13, 14) constituent le mécanisme amplificateur du mouvement de la came (4).

L'engrenage (13) est mécaniquement relié à une excroissance (15) de la came (4) dont la périphérie est dentée, alors que l'engrenage (14) est en prise, lors de la phase de restitution de l'énergie par le ressort (6), avec la couronne dentée (16) du rotor (7).

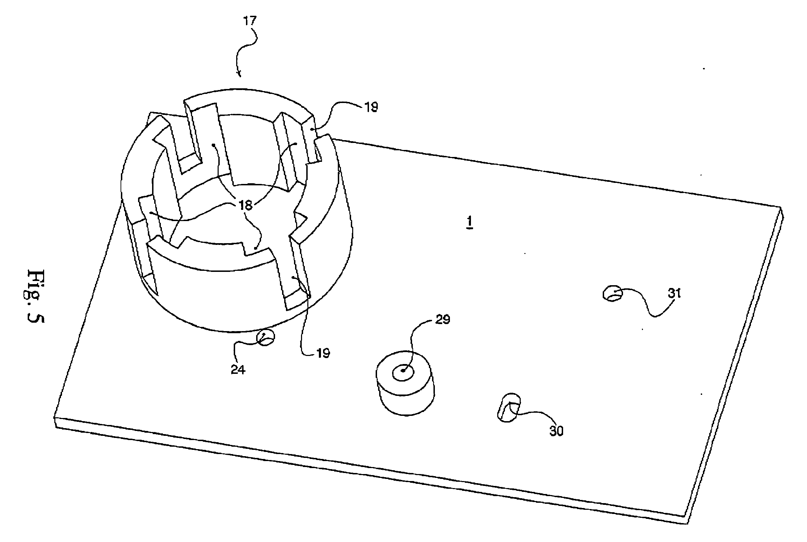

Les plaques (1, 2) servent au guidage et à la fixation des éléments disposés entre elles. Ainsi, le conduit (17), d'une seule pièce avec la plaque (1), contrôle le déplacement rectiligne du poussoir (3) dans lequel celui-ci coulisse par adaptation de forme. Ce conduit (17) présente à cet effet des évidements (18) (voir figure 5), dans le fond desquels sont pratiquées des fentes (19), respectivement adaptés pour coopérer avec les bras (20) et des doigts externes (21) du poussoir (3),

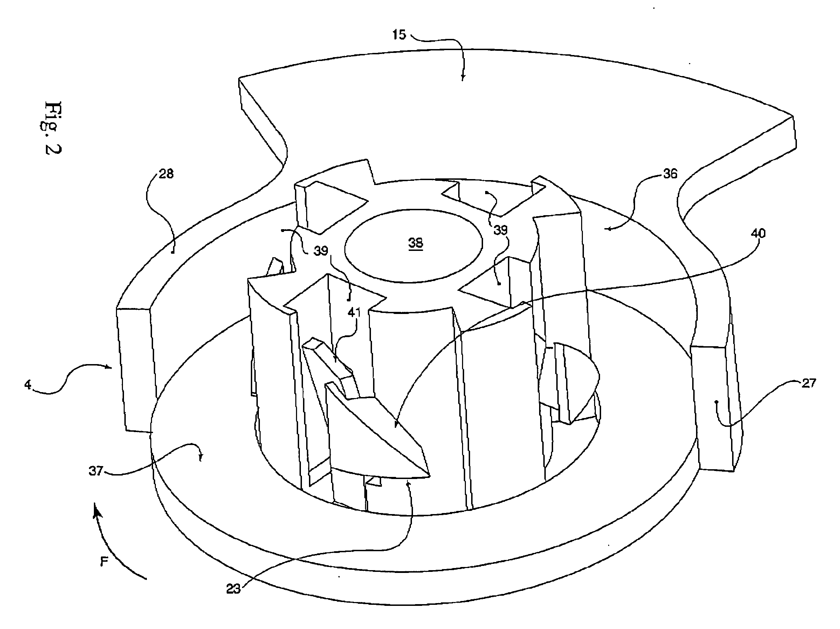

Les parois transversales de ces fentes (19) servent de butée aux doigts externes (21) lorsque le poussoir (3) est ramené en sa position de repos initial par le ressort de rappel (5). L'extrémité des bras (20) du poussoir (3) est également munie de doigts internes (22) prévus pour coopérer avec des reliefs (23) disposés à la périphérie du corps (36) (voir figure 2) de la came rotative (4). Le fonctionnement exact de cette coopération sera expliqué plus en détail dans la suite.

En périphérie du conduit (17), un orifice (24) a pour fonction de loger et de bloquer en rotation l'extrémité (25) de l'élément ressort (6), dont l'autre extrémité (26) est accrochée au chant (27) du muret (28) entourant le corps (36) de la came (4). Cette dernière liaison permet la déformation angulaire de l'élément ressort (6).

Les orifices (29, 30, 31) de la plaque supérieure (1) servent respectivement de palier aux engrenages (13, 14) et au rotor (16). Compte tenu de la différence de niveau entre les engrenages (13) et (14), le palier (29) se présente comme un fût dépassant parallèlement au conduit (17). Le palier (30), qui présente un tracé oblong, permet à l'engrenage (14) d'être débrayé de la couronne dentée (16) du rotor, comme on le verra plus en détail dans la suite.

Outre les plots (53) de support de la plaque (12) à circuit imprimé, la plaque inférieure (2) comporte également des paliers (32, 33, 34, 35) exerçant la même fonction que leurs homologues de la plaque supérieure (1). Ainsi, le palier (32) permet de recevoir l'extrémité d'un plot de pivotement solidaire de la came (4). De même, le palier (33) loge et permet le pivotement de l'arbre de l'engrenage (13), alors que le fût de section oblongue (34) sert de palier à l'engrenage (14). Enfin, le palier (35), traversant la plaque (12) du circuit Imprimé via un orifice correspondant, reçoit l'extrémité inférieure de l'arbre du rotor (7).

La figure 2 montre de manière plus détaillée la conception de la came rotative (4), qui est constituée d'un volume d'allure cylindrique central (36) surmontant une base plane annulaire (37). Une partie de la périphérie de cette base est dotée d'un muret (28) présentant l'excroissance (15). Le volume central cylindrique creux (38) du corps cylindrique (36) loge le ressort de rappel (5) prévu pour agir sur le poussoir (3). La périphérie du corps (36) comprend des évidements (39) de forme complexe, à l'intérieur desquelles font saillie des reliefs (23) d'allure triangulaire, dont la surface inclinée forme une rampe hélicoïdale (40). Les reliefs (23) sont sensiblement centrés dans leurs évidements (39), de telle sorte que des espaces subsistent entre eux et les parois et limites desdits évidements (39) pour permettre le passage des doigts Internes (22) du poussoir (3).

De préférence, les deux côtés rectilignes des reliefs d'allure triangulaire sont respectivement parallèle et perpendiculaire à l'axe de rotation (A) de la came (4). La portion de section rectangulaire des évidements (39) loge de plus une patte (41) élastique, d'une seule pièce avec le reste du corps cylindrique (36) et obstruant partiellement ladite portion d'évidement (39).

Cette patte élastique s'écarte lorsque le doigt interne (22) du poussoir (3) remonte, sous l'action du ressort de rappel (5). En revanche, dès que ledit doigt (22) a dépassé la patte (41), celle-ci revient élastiquement à sa position initiale, et empêche son retour vers le bas. Il s'agit donc d'une butée empêchant tout mouvement axial du poussoir (3) en direction de la base annulaire (37) de la came rotative (4). La face supérieure de ladite patte (41) est inclinée et située sensiblement dans le prolongement de la rampe hélicoïdale (40) du relief (23). De la sorte, lorsqu'une action dirigée selon l'axe (A) est exercée sur le poussoir (3), en principe via une touche (non représentée), seule la composante perpendiculaire à l'axe de rotation est active, entraînant le corps rotatif (36) et par conséquent la came (4), en rotation dans le sens montré par la flèche F.

Un espace surmontant la base annulaire (37), délimité entre le corps d'allure cylindrique (36) et le muret (28), est dévolu au logement de l'élément ressort (6), qui est disposé de telle sorte que son extrémité (26) soit au contact du chant (27) du muret (28).

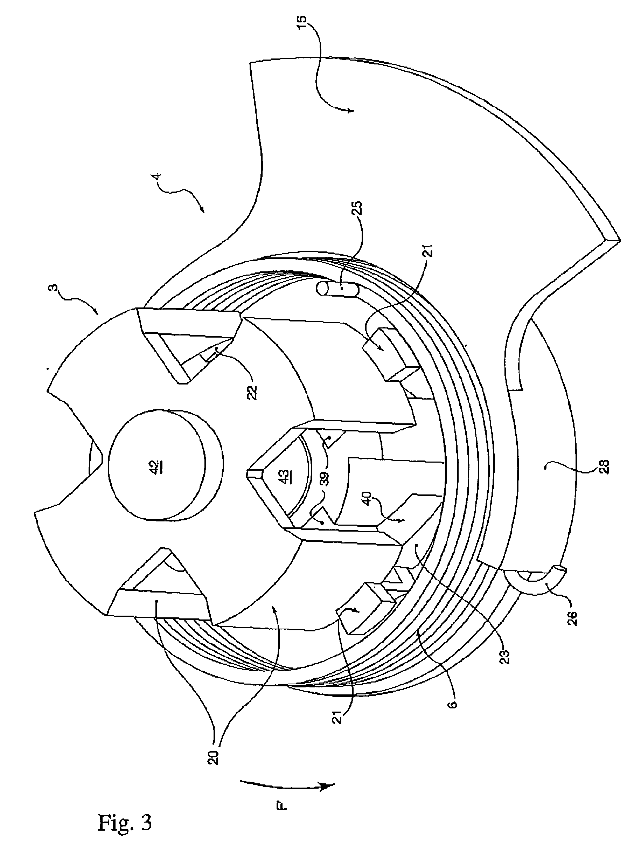

La figure 3 montre le ressort tel que logé dans la came (4), laquelle y est au surplus représentée surmontée par le poussoir (3). Les doigts internes (22) de ce dernier sont, en position de repos des différents éléments, au contact avec la face supérieure de la patte (41). En d'autres termes, les bras (20) du poussoir (3) sont, dans cette position de repos, situés sensiblement en face de la partie de section rectangulaire des évidements (39) du corps (36).

Lorsque l'utilisateur exerce une action sur l'organe de commande, par exemple une touche traditionnelle de bouton-poussoir, celle-ci est répercutée au poussoir (3) via l'excroissance en forme de pastille (42).

Chaque doigt (22) exerce une action axiale sur la face inclinée supérieure de la patte (41), ladite action axiale étant alors décomposée en deux composantes, comme on l'a mentionné auparavant. La composante tangentielle, perpendiculaire à l'axe (A) de rotation de la came (4), entraîne une rotation de ladite came (4), qui déforme le ressort du fait de l'action concomitante du chant (27) du muret (28) sur l'extrémité unciforme (26) de l'élément ressort (6). C'est la phase de stockage de l'énergie initialement communiquée par l'utilisateur à la touche.

Lorsque lesdits doigts (22) dépassent le bout de la rampe (40), à proximité de la base annulaire (37), aucune force de réaction ne s'exerce plus à leur encontre dès lors que le sommet du relief (23) triangulaire est franchi. En revanche, une action radiale étant toujours exercée sur le poussoir (3), les doigts (22) continuent leur course, axialement cette fois, en direction de la base annulaire (37). Le ressort (6), qui n'est plus soumis à un effort de torsion, tend à revenir à sa forme initiale, et ramène la came (4) dans sa position initiale par action de l'extrémité (26) sur le chant (27).

Les doigts (22), formant butée bloquant ce déplacement rotatif, se retrouvent alors dans la partie à section rectangulaire des évidements (39) et remontent vers les pattes élastiques (41) dès que la pression de l'utilisateur sur la touche se relâche, du fait de l'action du ressort de rappel (5) sur un fût central (43) guidé dans le conduit creux (38) de la came (4). Les pattes (41) s'écartent pour laisser le poussoir (3) revenir dans sa position initiale de repos.

C'est l'opération de débrayage, ou de restitution de l'énergie accumulée dans le ressort (6), suivie du retour du poussoir (3) à sa position de départ. Cette énergie est restituée sous forme d'une rotation en sens inverse de la précédente, figurée par la flèche F' apparaissant en figure 3.

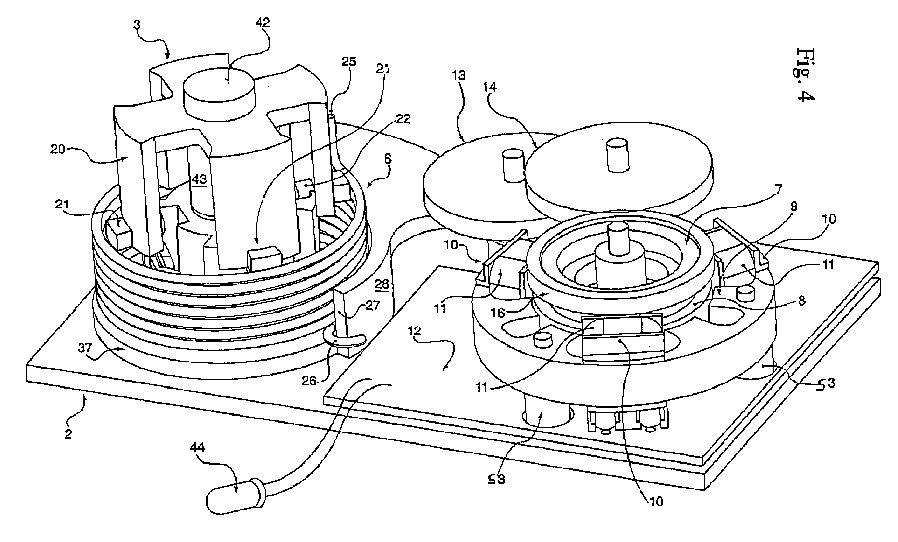

Une liaison mécanique existe entre la came (4), et plus particulièrement l'excroissance (15) dont la périphérie externe est dotée d'une denture, et le mécanisme amplificateur angulaire constitue des engrenages (13, 14). Cette liaison est notamment représentée en figure 4.

En réalité, comme cela apparaît en figure 1, les engrenages (13, 14) comportent deux portions cylindriques de diamètre différent dont la périphérie est dentée. L'objectif est bien entendu la réduction de l'occupation de l'espace. Ainsi, l'excroissance (15) engrène avec le petit pignon denté de l'engrenage (13), dont le grand pignon est en prise avec le petit pignon denté de l'engrenage (14). Ce dernier peut engrener avec la couronne dentée (16) du rotor au moyen de son pignon denté supérieur, de plus grand diamètre.

Les roues dentées, dont la combinaison des rapports de dentures permet l'amplification angulaire du mouvement de la came jusqu'à obtenir, dans le même mouvement de relaxation, plusieurs tours au niveau du rotor, sont conçues pour être identiques afin de réduire le nombre de composants, et utilisent des profils de denture à déport, permettant d'optimiser le rendement du rouage multiplicateur.

Ce mécanisme d'amplification mécanique angulaire permet, à l'aide d'un angle de rotation du ressort moteur (6) gardé relativement faible pour minimiser la variation du couple, d'obtenir plus de cinq tours du rotor (7) de la génératrice électrique.

La valeur de l'angle de rotation du ressort retenu est de l'ordre de 60°. Le rapport d'amplification est donc relativement élevé.

Les paliers oblongs (30, 34) permettent à l'engrenage (14) de se rapprocher et de se détacher de la couronne dentée (16) du rotor (7) du générateur électrique. Dans un premier temps, au moment du stockage de l'énergie dans le ressort moteur (6), ledit engrenage (14) est animé d'un mouvement de rotation de même direction que celui de la came (4) (voir flèche F) en figure 2.

A l'inverse, au moment du débrayage, lorsque l'énergie est restituée par l'élément ressort (6), le sens de rotation dudit engrenage (14) est celui qui est représenté par la flèche F' de la figure 3.

Dans le premier cas, les efforts appliqués sur l'engrenage (14) tendent à ramener son arbre de rotation vers l'extrémité des paliers oblongs (30, 24) la plus éloignée de l'axe de rotation (B). Dans le second cas, les efforts moteurs et réactifs subis ramènent au contraire son arbre dans la direction de la couronne (16), et permettent l'embrayage et la transmission de l'énergie pendant une période prédéterminée.

La figure 4 montre également, de manière schématique, l'existence d'une diode électroluminescente (44) électriquement connectée au circuit imprimé de la plaque (12).

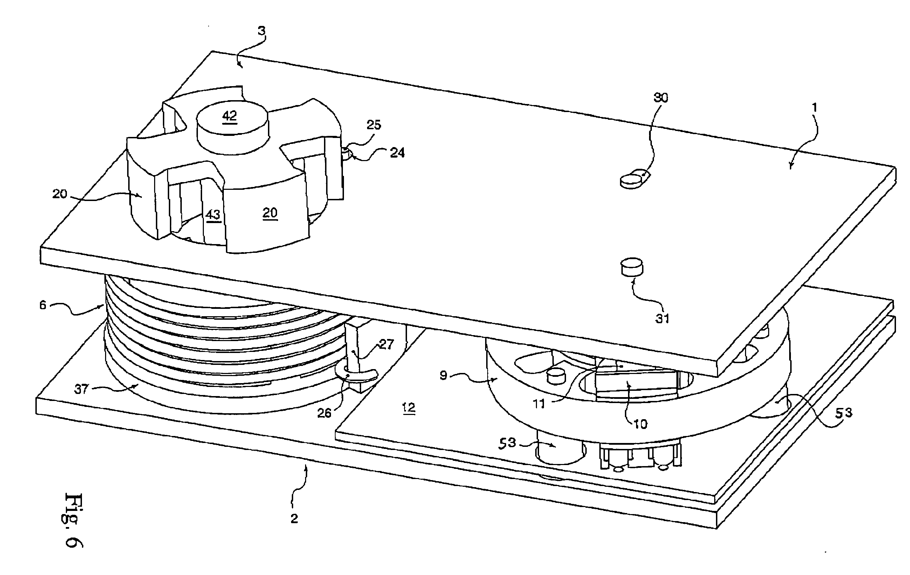

En référence à la figure 6, l'ensemble prémonté incluant tous les composants apparaissant en figure 1 est représenté assemblé. Cette figure permet de voir qu'en position de repos, la partie supérieure du poussoir (3) surmonté par la pastille (42) saille de manière assez importante au-dessus de la surface de la plaque (1). A proximité du poussoir (3), dans cette représentation assemblée, apparaît l'extrémité (25) de l'élément ressort moteur (6), fichée dans l'orifice (24) pratiqué dans la plaque (1). Ainsi, cette extrémité (25) est maintenue immobile, la déformation du ressort n'intervenant alors qu'au niveau de l'autre extrémité (26).

L'extrémité supérieure de l'arbre de rotation de l'engrenage (14) apparaît également, dans orifice oblong (30) marquant l'emplacement du palier correspondant. Dans la position dans laquelle il est représenté, l'engrenage (14) est en prise avec la couronne dentée (16) du rotor (7). Enfin, l'extrémité supérieure de l'arbre de rotation de ce dernier apparaît également, dans l'orifice (31).

Les dimensions extérieures de l'ensemble apparaissant en figure 6 sont de l'ordre de 42mm de longueur, 24mm de largeur et 10mm de hauteur (hors poussoir). La pression axiale nécessaire à l'actionnement du mécanisme est, selon une configuration préférentielle de l'invention, prévue aux alentours de 4 N.

Selon un choix dont les tests ont montré le bien fondé, la structure polarisée proposée est composée d'un stator possédant neuf pôles statoriques et d'un almant avec cinq paires de pôles. Les essais sur le ressort montrent que, s'il est choisi avec un coefficient de raideur de 1,3 Nmm/rd, le fonctionnement est satisfaisant.

La plupart des pièces entrant dans la construction de cet ensemble sont fabriquées en plastique, et donc de production peu onéreuse. La pièce la plus compliquée, la came (4), ne nécessite pas de moule à tiroir.

La fabrication peut être largement automatisée, du fait du parallélisme entre les axes de fonctionnement. Le générateur électrique, ainsi que les composants du circuit électronique implantés sur la plaque à circuit imprimé, peuvent y être prémontés, constituant ainsi un sous-ensemble facilitant l'assemblage final.

Bien entendu, l'exemple ci-dessus ne doit pas être considéré comme exhaustif de l'invention, qui comporte au contraire l'ensemble des variantes de forme et de configurations qui sont à la porté de l'homme de l'art et tombent dans le cadre des revendications.

## Revendications

1. Dispositif de télécommande de l'état d'au moins un dispositif récepteur, comportant:
- au moins un organe de commande mobile entre une position de repos stable, à laquelle il est rappelé après action, et une position de commande, à la manière d'un commutateur
- des moyens de transmission (3, 4) au l'énergie mécanique utilisée pour actionner l'organe de commande, entraînés par ce dernier pendant sa course d'actionnement jusqu'à obtention d'un débrayage en fin de course, lesdits moyens de transmission (3, 4) revenant alors à leur position initiale,
- des moyens de stockage et de restitution (6) de l'énergie mécanique communiquée par lesdits moyens de transmission (3, 4), ladite restitution débutant au moment du débrayage, en fin de course,
- l'énergie restituée étant utilisée pour actionner un générateur électrique (7, 8, 9, 10, 11) prévu pour alimenter un circuit électronique émettant des signaux de commande à l'adresse du ou des dispositifs récepteurs,
**caractérisé en ce que** les moyens de transmission (3, 4) de l'énergie mécanique et les moyens de stockage et de restitution (6) de ladite énergie sont disposés coaxiaux, leur axe (A) étant coaxial ou parallèle à l'axe d'application de l'action exercée par l'organe de commande.

2. Dispositif de télécommande selon la revendication précédente, **caractérisé en ce que** les moyens de stockage et de restitution de l'énergie mécanique consistent en un élément ressort (6) interposé entre une pièce fixe (17) par rapport au boîtier du commutateur et lesdits moyens de transmission (3, 4), élément (6) qui emmagasine l'énergie mécanique issue de l'organe de commande et la restitue après ledit débrayage.

3. Dispositif de télécommande selon la revendication précédente, **caractérisé en ce que** les éléments ressort (5, 6) sont utilisés comme moyen de rappel desdits moyens de transmission (3, 4) de l'énergie en leur position initiale.

4. Dispositif de télécommande selon l'une des revendications précédentes, **caractérisé en ce que** lesdits moyens de transmission (3, 4) de l'énergie comportent une pièce (4) animée d'un mouvement rotatif communiqué à l'élément ressort (6) constituant les moyens de stockage et de restitution de l'énergie.

5. Dispositif de télécommande selon l'une des revendications précédentes, **caractérisé en ce que** l'organe de commande est une touche exerçant sur les moyens de transmission (3, 4) de l'énergie une action de direction sensiblement rectiligne.

6. Dispositif de télécommande selon la revendication précédente, **caractérisé en ce que** ladite touche exerce une action sur un poussoir (3) auquel elle transmet l'énergie qu'elle reçoit, ledit poussoir (3) étant guidé en translation rectiligne dans le boîtier du commutateur et entraînant ladite pièce rotative constituée d'une came (4) d'allure cylindrique transformant le déplacement linéaire dudit poussoir en un déplacement rotatif.

7. Dispositif de télécommande selon la revendication précédente, **caractérisé en ce que** le poussoir (3) entoure ladite came (4) et agit sur elle par l'intermédiaire d'au moins un doigt (22) d'orientation radiale qui coopère avec une rampe hélicoïdale (40) pratiquée dans la surface en regard de la came (4), sur un relief (23) sensiblement en forme de triangle rectangle dont elle forme l'hypoténuse, et dont les côtés rectilignes sont respectivement parallèle et perpendiculaire à l'axe (A) de la came, ledit relief (23) faisant saillie dans un évidement (39) pratiqué dans ladite surface laissant subsister un espace entre ses parois et lesdits côtés rectilignes pour assurer la guidage dudit doigt (22) lorsque la came (4) et le poussoir (3) sont rappelés à leur position initiale après leur débrayage, provoqué par la franchissement par le doigt (22) du sommet du triangle défini par la rampe (40) et le côté perpendiculaire à l'axe de la came (4).

8. Dispositif de télécommande selon la revendication précédente, **caractérisé en ce que** chaque doigt (22) est dirigé vers l'intérieur du poussoir (3), en direction de la surface périphérique externe de la came (4).

9. Dispositif de télécommande selon l'une des revendications 7 et 8, **caractérisé en ce que** le sommet du relief (23) d'allure triangulaire défini par le côté rectiligne parallèle à l'axe de la came (4) et la rampe (40) est surmonté d'une patte élastique (41), d'une seule pièce avec ladite came (4) et dont une face prolonge sensiblement ladite rampe (40), dépassant dans l'espace ménagé entre ledit côté et la paroi en regard de l'évidement (39), formant butée axiale pour ledit doigt (22).

10. Dispositif de télécommande selon l'une des revendications 7 à 9, **caractérisé en ce que** le poussoir (3) comporte des doigts (22) répartis à intervalle régulier le long de la périphérie de la came (4), qui comprend un nombre et une répartition correspondante de reliefs (23) à rampe (40) hélicoïdale, lesdits doigts (22) étant disposés à l'extrémité de bras (20) parallèles à l'axe (A) de la came (4), dont les autres extrémités sont réunies en une paroi comportant un élément de contact (42) avec la touche.

11. Dispositif de télécommande selon la revendication précédente, **caractérisé en ce que** ledit élément de contact est constitué d'une pastille (42) centrée par rapport auxdits bras (20) axiaux.

12. Dispositif de télécommande selon l'une des revendications 10 et 11, **caractérisé en ce que** les bras (20) et les doigts (22) du poussoir (3) sont guidés en translation dans un conduit d'allure cylindrique (17) monté fixe dans le boîtier du contacteur, doté d'évidements axiaux (18) logeant lesdits bras (20), et dont les fonds comportent des fentes (19) dans lesquelles coulissent des prolongements externes (21) desdits doigts, les extrémités transversales desdites fentes (19) constituant des butées axiales pour ces prolongements (21).

13. Dispositif de télécommande selon l'une des revendications 6 à 12, **caractérisé en ce que** le poussoir (3) comporte un arbre central (43) coulissant dans un conduit central axial (38) de la came (4), un ressort (5) rappelant ledit poussoir (3) dans sa position initiale de repos étant interposé entre eux.

14. Dispositif de télécommande selon l'une des revendications 6 à 13, **caractérisé en ce que** la came (4) rotative est montée libre en rotation dans un paller (32) prévu fixe par rapport au boîtier du commutateur.

15. Dispositif de télécommande selon rune des revendications 6 à 14, **caractérisé en ce que** l'une des extrémités (26) de l'élément ressort (6) est solidaire de la came (4) rotative, l'autre extrémité (25) étant montée fixe par rapport au boîtier du commutateur..

16. Dispositif de télécommande selon la revendication précédente, **caractérisé en ce que** l'élément ressort est un ressort de torsion (6) hélicoïdal entourant la base du corps central (36) cylindrique de la came (4) rotative, et présentant un axe de torsion coaxial à l'axe (A) de rotation de ladite came (4).

17. Dispositif de télécommande selon l'une des revendications 6 à 16, **caractérisé en ce que** le générateur électrique (7, 8, 9, 10, 11) est rotatif, d'axe (B) parallèle à la came (4) rotative.

18. Dispositif de télécommande selon l'une des revendications 6 à 17, **caractérisé en ce que** la came (4) rotative comporte une excroissance (15) s'étendant radialement, prévue pour entraîner un mécanisme (13, 14) d'actionnement du générateur électrique (7, 8, 9, 10, 11).

19. Dispositif de télécommande selon la revendication précédente, **caractérisé en ce que** la périphérie de ladite excroissance (15) est munie de dents coopérant avec un jeu d'engrenages (13, 14) amplifiant son déplacement angulaire et sa vitesse, l'engrenage (14) de sortie dudit jeu étant engrené avec le rotor (7) du générateur lors de la restitution d'énergie par l'élément ressort (6) après débrayage du poussoir (3) et de la came (4).

20. Dispositif de télécommande selon la revendication précédente, **caractérisé en ce que** ledit engrenage (14) de sortie est libre en rotation dans des paliers oblongs (30, 34) fixes par rapport au boîtier du commutateur, de grand axe orienté radialement par rapport à l'axe (B) de rotation dudit rotor (7).

21. Dispositif de télécommande selon l'une des revendications 17 à 20, **caractérisé en ce que** le générateur électrique (7, 8, 9, 10, 11) produit un courant électrique sinusoïdal triphasé.

22. Dispositif de télécommande selon l'une des revendications 17 à 21, **caractérisé en ce que** le générateur électrique (7, 8, 9, 10, 11) est monté sur une plaque (12) à circuit imprimé comportant les composants du circuit électronique émetteur de signaux à l'adresse du ou des dispositifs récepteurs.

23. Dispositif de télécommande selon la revendication précédente, **caractérisé en ce que** le circuit électronique comporte un pont de diodes redressant le courant produit, qui charge une capacité alimentant temporairement le circuit émetteur du signal radio et excitant une diode (44) électroluminescente.

24. Dispositif de télécommande selon l'une des revendications 22 et 23, **caractérisé en ce que** le circuit électronique comporte des moyens de test, dans le cas où plusieurs contacts équipent la touche du commutateur, en vue de tester le contact ou la combinaison de contacts activée.

25. Dispositif de télécommande selon rune des revendications 22 à 24, **caractérisé en ce que** l'élément ressort (6) constitue l'antenne d'émission du signal, et son extrémité fixe est reliée au circuit électronique.

26. Dispositif de télécommande selon l'une des revendications 22 à 25, **caractérisé en ce que** des paliers (32, 33) de rotation de la came (4) et d'au moins un engrenage (14) du jeu d'engrenages (13, 14) amplificateur sont pratiqués dans une première plaque (2) à laquelle est fixé le circuit imprimé (12), le conduit (17) de guidage du poussoir (3), le palier (31) du rotor (7) du générateur, le palier de rotation (29, 30) d'au moins un engrenage (13, 14) et un orifice (24) de fixation de l'une des extrémités (25) du ressort (6) étant pratiqué dans une seconde plaque (1) de dimensions identiques à la première, lesdites plaques (1, 2), disposées en regard l'une de l'autre, délimitant un volume dans lequel ces éléments sont assemblés, formant un ensemble compact monté dans le boîtier du commutateur.

## Claims

1. Remote control device controlling the state of at least one receiving device, comprising of:
- at least one control component, mobile between a stable position of rest to which it is returned after being activated, and an activated position, in a manner similar to a switch,
- a means of transmitting (3, 4) the mechanical energy used to operate the control component, driven by the latter during its actuation stroke until being disengaged at the end of its travel, the said means of transmission (3, 4) returning to its initial position,
- a means of storage and release (6) of the mechanical energy provided by said transmission means (3, 4), the release beginning at the moment of disengagement at the end of travel,
- the released energy being used to drive an electric generator (7, 8, 9, 10, 11) provided for supplying an electronic circuit emitting control signals addressed to the receiving device or devices, **characterized in that** the means of transmitting (3, 4) the mechanical energy and the means of storage and release (6) of said energy are arranged coaxially, their axis (A) being coaxial or parallel to the axis of application of the action exerted by the control component.

2. Remote control device according to the preceding claim, **characterized in that** the means of storage and release of the mechanical energy consists of a spring component (6) located between a part (17) fixed in relation to the switch housing and the said means of transmission (3, 4), component (6) which stores the mechanical energy coming out of the control component and releases it after the said disengagement.

3. Remote control device according to the preceding claim, **characterized in that** the spring components (5, 6) are used as a means of recalling the said energy transmission means (3, 4) to their initial position.

4. Remote control device according to one of the preceding claims, **characterized in that** the said energy transmission means (3, 4) comprises of a part (4) driven in a rotary motion transmitted to the spring component (6) constituting the means of storage and release of energy.

5. Remote control device according to one of the preceding claims, **characterized in that** the control component is a button exerting an action on the energy transmission means (3, 4) that is essentially linear.

6. Remote control device according to the preceding claim, **characterized in that** said button exerts an action on a plunger (3) to which it transmits the energy it receives, the said plunger (3) being guided in a straight line movement in the switch housing and driving the said rotating component consisting of a cam (4) of cylindrical appearance transforming the linear movement of said plunger into a rotary movement.

7. Remote control device according to the preceding claim, **characterised in that** the plunger (7) surrounds the said cam (4) and acts on it through at least one radial orientation lug (22) which works with a helical groove (40) formed in the surface facing the cam (4), on a form (23) that is essentially a right-angled triangular of which it forms the hypotenuse, and of which the straight sides are respectively parallel and perpendicular to the axis (A) of the cam, the said form (23) protruding into a recess (39) formed in the said surface whilst leaving a space between its walls and the said straight sides in order to assure that the lug (22) is guided when the cam (4) and the plunger (3) are recalled to their initial position after their disengagement, provoked by the lug (22) reaching the tip of the triangle defined by the ramp (40) and the side perpendicular to the axis of the cam (4).

8. Remote control device according to the preceding claim, **characterized in that** each lug (22) is protruding towards the inside of the plunger (3) in the direction of the outer peripheral surface of the cam (4).

9. Remote control device according to one of claims 7 and 8, **characterized in that** the tip of the triangular shaped form (23) defined by the straight side parallel to the axis of the cam (4) and the ramp (40) is topped off by a resilient tab (41), which is part of the said cam (4) and of which one face extends substantially past the said ramp (40) protruding into the space between the said side and the wall opposite the recess (39), forming an axial stop for said lug (22).

10. Remote control device according to one of claims 7 to 9, **characterized in that** the plunger (3) has lugs (22) distributed at regular intervals along the periphery of the cam (4), comprising of a number and a distribution corresponding to the number of forms (23) on the helical ramp (40), the said lugs (22) being arranged at the end of the arms (20) parallel to the axis (A) of the cam (4), whose other ends come together in a plate carrying a contact component (42) with the button.

11. Remote control device according to the preceding claim, **characterized in that** said contact component consists of a disc (42) centred in respect to said axial arms (20).

12. Remote control device according to one of the claims 10 and 11, **characterized in that** the movements of the arms (20) and the lugs (22) of the plunger (3) are guided in a cylindrically shaped conduit (17) mounted solidly in the switch housing, with axial recesses (18) housing the said arms (20), and of which the bottoms have slots (19) in which external extensions (21) of said lugs slide, the transversal ends of the said slots (19) constituting axial stops for these extensions (21).

13. Remote control device according to one of claims 6 to 12, **characterized in that** the plunger (3) comprises a central shaft (43) sliding in a central axial conduit (38) of the cam (4), a spring (5) returning the said plunger (3) to its initial position of rest between them.

14. Remote control device according to one of Claims 6 to 13, **characterized in that** the rotating cam (4) is mounted to rotate freely in a provided bearing (32) fixed relative to the switch housing.

15. Remote control device according to one of claims 6 to 14, **characterized in that** one of the ends (26) of the spring component (6) is connected to the rotating cam (4), the other end (25) being mounted fixed solidly relative to the switch housing.

16. Remote control device according to the preceding claim, **characterized in that** the spring component is a helical torsion spring (6) surrounding the base of the central cylindrical body (36) of the rotating cam (4), and having a torsional axis coaxial to the rotational axis (A) of the said cam (4).

17. Remote control device according to one of claims 6 to 16, **characterized in that** the electric generator (7, 8, 9, 10, 11) is rotary, with an axis (B) parallel to the rotating cam (4).

18. Remote control device according to one of claims 6 to 17, **characterized in that** the rotary cam (4) comprises a protrusion (15) extending radially, provided for driving a mechanism (13, 14) for actuating the electric generator (7, 8, 9, 10, 11).

19. Remote control device according to the preceding claim, **characterized in that** the periphery of the said protrusion (15) has teeth working in conjunction with a set of gears (13, 14) amplifying its angular displacement and speed, the output gear (14) of that said set being meshed with the rotor (7) of the generator during the release of energy by the spring component (6) after disengagement of the plunger (3) and the cam (4).

20. Remote control device according to the preceding claim, **characterized in that** the said output gear (14) is freely rotating in elongated bearings (30, 34) fixed in relation to the switch housing, the main axis oriented radially in relation to the rotational axis (B) of the said rotor (7).

21. Remote control device according to one of claims 17 to 20, **characterized in that** the electric generator (7, 8, 9, 10, 11) produces a three-phase sinusoidal electric current.

22. Remote control device according to one of claims 17 to 21, **characterized in that** the electric generator (7, 8, 9, 10, 11) is mounted on a printed circuit board (12) carrying the components of the electronic circuit transmitting signals to the receiving device or devices.

23. Remote control device according to the preceding claim, **characterized in that** the electronic circuit comprises a diode bridge rectifying the current produced, which charges a capacitor temporarily supplying the radio signal transmitter circuit and powering a light emitting diode (44).

24. Remote control device according to one of Claims 22 and 23, **characterized in that** the electronic circuit comprises a means of test, in the case where several contacts are fitted to the switch button, in order to test the contact or the combination of contacts activated.

25. Remote control device according to one of claims 22 to 24, **characterized in that** the spring component (6) constitutes the signal transmission antenna, and its fixed end is connected to the electronic circuit.

26. Remote control device according to one of claims 22 to 26, **characterized in that** rotation bearings (32, 33) of the cam (4) and of at least one gear (14) of the set of amplifier gears (13, 14) are formed in a first plate (2) to which are fixed to the printed circuit (12), the conduit (17) for guiding the plunger (3), the generator rotor (7) bearing (31), the rotation bearing (29, 30) of at least one gear (13, 14) and an orifice (24) for fixing one end (25) of the spring (6) being formed in a second plate (1) with identical dimensions to the first, the said plates (1, 2), arranged facing one another, defining a volume in which these elements are assembled, forming a compact assembly mounted in the switch housing.

## Patentansprüche

1. Fernsteuerungsvorrichtung des Zustands mindestens einer Empfangsvorrichtung, die aufweist:
- mindestens ein zwischen einer stabilen Ruhestellung, in die es nach der Aktion zurückgerufen wird, und einer Befehlsstellung in der Art eines Schalters bewegbares Steuerorgan,
- Übertragungsmittel (3, 4) der mechanischen Energie, die zur Betätigung des Steuerorgans verwendet wird, die von diesem Letztgenannten während seines Aktionslaufs angetrieben werden bis zu einem Auskuppeln in Endlage, wobei die Übertragungsmittel (3, 4) dann in ihre Ausgangsstellung zurückkehren,
- Speicher- und Rückgabemittel (6) der von den Übertragungsmitteln (3, 4) kommunizierten mechanischen Energie, wobei die Rückgabe im Augenblick des Auskuppelns in Endlage beginnt,
- wobei die zurückgegebene Energie verwendet wird, um einen elektrischen Generator (7, 8, 9, 10, 11) zu betätigen, der zur Versorgung einer elektronischen Schaltung vorgesehen ist, die Steuersignale an die Adresse der Empfangsvorrichtung(en) sendet,
**dadurch gekennzeichnet, dass** die Übertragungsmittel (3, 4) der mechanischen Energie und die Speicher- und -rückgabemittel (6) der Energie koaxial angeordnet sind, wobei ihre Achse (A) koaxial oder parallel zur Umsetzungsachse der vom Steuerorgan ausgeübten Aktion ist.

2. Fernsteuerungsvorrichtung nach vorangehendem Anspruch, **dadurch gekennzeichnet, dass** die Speicher- und Rückgabemittel der mechanischen Energie aus einem Federelement (6) bestehen, das zwischen einem im Verhältnis zum Schaltergehäuse starren Teil (17) und den Übertragungsmitteln (3, 4) zwischengestellt ist, wobei das Element (6) die mechanische Energie des Steuerorgans speichert und sie nach dem Auskuppeln zurückgibt.

3. Fernsteuerungsvorrichtung nach vorangehendem Anspruch, **dadurch gekennzeichnet, dass** die Federmittel (5, 6) als Rückstellungsmittel der Energieübertragungsmittel (3, 4) in ihre Ausgangsstellung verwendet werden.

4. Fernsteuerungsvorrichtung nach einem der vorangehenden Ansprüche, **dadurch gekennzeichnet, dass** die Energieübertragungsmittel (3, 4) ein rotierend angetriebenes Teil (4) aufweisen, dessen Bewegung an das Federelement (6) übertragen wird, das die Energiespeicher- und -rückgabemittel bildet.

5. Fernsteuerungsvorrichtung nach einem der vorangehenden Ansprüche, **dadurch gekennzeichnet, dass** das Steuerorgan eine Taste ist, die auf die Energieübertragungsmittel (3, 4) eine Aktion in etwa senkrechter Richtung ausübt.

6. Fernsteuerungsvorrichtung nach vorangehendem Anspruch, **dadurch gekennzeichnet, dass** die Taste eine Aktion auf einen Knopf (3) ausübt, an den sie die Energie, die sie erhält, überträgt, wobei der Knopf (3) in gerader Verschiebung in das Schaltergehäuse geführt wird und das rotierende Teil antriebt, das von einem zylindrischen Nocken (4) gebildet wird, der die lineare Verschiebung des Knopfs in eine rotierende Verschiebung umwandelt.

7. Fernsteuerungsvorrichtung nach vorangehendem Anspruch, **dadurch gekennzeichnet, dass** der Knopf (3) den Nocken (4) umgibt und auf ihn über mindestens einen radial ausgerichteten Finger (22) einwirkt, der mit einer wendelförmigen Rampe (40) zusammenarbeitet, die in die Oberfläche gegenüber dem Nocken (4) auf einem Relief (23) etwa in Form eines rechtwinkligen Dreieck eingearbeitet ist, von dem sie die Hypotenuse bildet und dessen gerade Seiten jeweils parallel und senkrecht zur Achse (A) des Nockens verlaufen, wobei das Relief (23) in eine Aussparung (39) ragt, die in die Oberfläche eingearbeitet ist, wobei ein Raum zwischen ihren Wänden und den geraden Seiten verbleibt, um die Führung des Fingers (22) sicherzustellen, wenn der Nocken (4) und der Knopf (3) nach ihrer Auskupplung in ihre Ausgangsstellung zurückgerufen werden, was durch Überwinden der Spitze des Dreiecks, die von der Rampe (40) und der Seite senkrecht zur Achse des Nockens (4) gebildet wird, durch den Finger (22) erfolgt.

8. Fernsteuerungsvorrichtung nach vorangehendem Anspruch, **dadurch gekennzeichnet, dass** jeder Finger (22) in das Innere des Knopfes (3) in Richtung der externen Umfangsfläche des Nockens (4) gerichtet ist.

9. Fernsteuerungsvorrichtung nach einem der Ansprüche 7 und 8, **dadurch gekennzeichnet, dass** über der dreieckigen Spitze des Reliefs (23), die von der geraden, parallel zur Achse des Nockens (4) verlaufenden Seite und der Rampe (40) gebildet wird, ein elastischer Fuß (41) aus einem einzigen Teil mit dem Nocken (4) steht, von dem eine Seite die Rampe (40) deutlich verlängert, indem er in den Raum reicht, der zwischen der Seite und der Wand gegenüber der Aussparung (39) eingearbeitet ist und einen axialen Anschlag für den Finger (22) bildet.

10. Fernsteuerungsvorrichtung nach einem der Ansprüche 7 bis 9, **dadurch gekennzeichnet, dass** der Knopf (3) Finger (22) aufweist, die in regelmäßigem Abstand entlang des Umfangs des Nockens (4) verteilt sind, der eine Anzahl und eine entsprechende Verteilung von Reliefs (23) mit wendelförmiger Rampe (40) aufweist, wobei die Finger (22) am Ende von zur Achse (A) des Nockens (4) parallelen Armen (20) angeordnet sind, deren andere Enden in einer Wand vereint sind, die ein Kontaktelement (42) mit der Taste aufweist.

11. Fernsteuerungsvorrichtung nach vorangehendem Anspruch, **dadurch gekennzeichnet, dass** das Kontaktelement von einer im Verhältnis zu den axialen Armen (20) zentrierten Pastille (42) gebildet wird.

12. Fernsteuerungsvorrichtung nach einem der Ansprüche 10 und 11, **dadurch gekennzeichnet, dass** die Arme (20) und die Finger (22) des Knopfes (3) in einer zylindrischen Führung (17) verschiebend geführt werden, die im Schaltergehäuse starr montiert ist und mit axialen Aussparungen (18) ausgestattet, die die Arme (20) aufnimmt, deren Böden Schlitze (19) aufweisen, in denen externe Verlängerungen (21) der Finger gleiten, wobei die transversalen Enden der Schlitze (19) axiale Anschläge für diese Verlängerungen (21) darstellen.

13. Fernsteuerungsvorrichtung nach einem der Ansprüche 6 bis 12, **dadurch gekennzeichnet, dass** der Knopf (3) eine zentrale Welle (43) aufweist, die in einer axialen zentralen Führung (38) des Nockens (4) gleitet, wobei eine Feder (5), die den Knopf (3) in seine Ausgangsruhestellung zurückruft, zwischen ihnen zwischengestellt ist.

14. Fernsteuerungsvorrichtung nach einem der Ansprüche 6 bis 13, **dadurch gekennzeichnet, dass** der drehende Nocken (4) frei drehend in einem Lager (32) montiert ist, das im Verhältnis zum Schaltergehäuse starr ist.

15. Fernsteuerungsvorrichtung nach einem der Ansprüche 6 bis 14, **dadurch gekennzeichnet, dass** eines der Enden (26) des Federelements (6) mit dem drehenden Nocken (4) verbunden ist, wobei das andere Ende (25) im Verhältnis zum Schaltergehäuse starr montiert ist.

16. Fernsteuerungsvorrichtung nach vorangehendem Anspruch, **dadurch gekennzeichnet, dass** das Federelement eine schraubenförmige Torsionsfeder (6) ist, die die Basis des zylindrischen Zentralkörpers (36) des drehenden Nockens (4) umschließt und eine Torsionsachse koaxial zur Rotationsachse (A) des Nockens (4) aufweist.

17. Fernsteuerungsvorrichtung nach einem der Ansprüche 6 bis 16, **dadurch gekennzeichnet, dass** der elektrische Generator (7, 8, 9, 10, 11) drehend ist mit Achse (B) parallel zum drehenden Nocken (4).

18. Fernsteuerungsvorrichtung nach einem der Ansprüche 6 bis 17, **dadurch gekennzeichnet, dass** der drehende Nocken (4) eine sich radial erstreckende Ausstülpung (15) aufweist, die vorgesehen ist, um einen Betätigungsmechanismus (13, 14) des elektrischen Generators (7, 8, 9, 10, 11) anzutreiben.

19. Fernsteuerungsvorrichtung nach vorangehendem Anspruch, **dadurch gekennzeichnet, dass** der Umfang der Ausstülpung (15) mit Zähnen ausgestattet ist, die mit einem Zahnradsatz (13, 14) zusammenarbeiten, der ihre Winkelverschiebung und ihre Geschwindigkeit verstärkt, wobei das Ausgangszahnrad (14) des Satzes bei der Rückgabe von Energie durch das Federelement (6) nach Auskupplung des Knopfes (3) und des Nockens (4) mit dem Rotor (7) des Generators verzahnt ist.

20. Fernsteuerungsvorrichtung nach vorangehendem Anspruch, **dadurch gekennzeichnet, dass** das Ausgangszahnrad (14) in länglichen Lagern (30, 34) frei drehen ist, die im Verhältnis zum Schaltergehäuse starr sind, wobei die große Achse radial im Verhältnis zur Rotationsachse (B) des Rotors (7) ausgerichtet ist.

21. Fernsteuerungsvorrichtung nach einem der Ansprüche 17 bis 20, **dadurch gekennzeichnet, dass** der elektrische Generator (7, 8, 9, 10, 11) einen elektrischen Dreiphasen-Sinusstrom produziert.

22. Fernsteuerungsvorrichtung nach einem der Ansprüche 17 bis 21, **dadurch gekennzeichnet, dass** der elektrische Generator (7, 8, 9, 10, 11) auf einer Platte (12) mit gedruckter Schaltung montiert ist, die die Bauteile der elektronischen Schaltung aufweist, die Signale an die Adresse der Empfangsvorrichtung(en) sendet.

23. Fernsteuerungsvorrichtung nach vorangehendem Anspruch, **dadurch gekennzeichnet, dass** die elektronische Schaltung eine Diodenbrücke aufweist, die den produzierten Strom gleichrichtet, der eine Kapazität lädt, die zeitweilig die Schaltung versorgt, die das Funksignal sendet und eine elektrolumineszierende Diode (44) anspricht.

24. Fernsteuerungsvorrichtung nach einem der Ansprüche 22 und 23, **dadurch gekennzeichnet, dass** die elektronische Schaltung, wenn mehrere Kontakte die Schaltertaste ausrüsten, Testmittel aufweist, um den Kontakt oder die aktivierte Kontaktkombination zu testen.

25. Fernsteuerungsvorrichtung nach einem der Ansprüche 22 bis 24, **dadurch gekennzeichnet, dass** das Federelement (6) eine Sendeantenne des Signals darstellt und ihr starres Ende mit der elektronischen Schaltung verbunden ist.

26. Fernsteuerungsvorrichtung nach einem der Ansprüche 22 bis 25, **dadurch gekennzeichnet, dass** Rotationslager (32, 33) des Nockens (4) und mindestens eines Zahnrads (14) des verstärkenden Zahnradsatzes (13, 14) in eine erste Platte (2) eingearbeitet sind, an der die gedruckte Schaltung (12) befestigt ist, wobei die Führung (17) des Knopfes (3), das Lager (31) des Rotors (7) des Generators, das Rotationslager (29, 30) mindestens eines Zahnrads (13, 14) und eine Befestigungsöffnung (24) einer der Enden (25) der Feder (6) in eine zweite Platte (1) gleicher Abmessung wie die erste eingearbeitet sind, wobei die Platten (1, 2), die gegenüberliegend angeordnet sind, ein Volumen begrenzen, in dem diese Elemente montiert sind und eine kompakte Gruppe bilden, die in das Schaltergehäuse eingebaut ist.
